Europäisches Patentamt

European Patent Office

Office européen des brevets

(19)

(11) Publication number: 0 348 374
A1

(12)

# EUROPEAN PATENT APPLICATION

(21) Application number: 89850203.4

(22) Date of filing: 20.06.89

(51) Int. Cl.⁴: B 60 N 1/12

(30) Priority: 22.06.88 SE 8802350

(43) Date of publication of application:
27.12.89 Bulletin 89/52

(84) Designated Contracting States: DE FR GB IT SE

(71) Applicant: AB AKTA BARNSÄKERHET
Box 7044
S-171 07 Solna (SE)

(72) Inventor: Sköld, Björn-Ake
Vikingsvägen 16
S-605 80 Norrköping (SE)

(74) Representative: Onn, Thorsten et al
AB Stockholms Patentbyra Zacco & Bruhn P.O. Box 3129
S-103 62 Stockholm (SE)

(54) A vehicle seat structure which incorporates a child's chair.

(57) The invention relates to a vehicle seat structure structure which incorporates a child's chair. The chair is constructed so as to enable it to be fitted to the back rest (2) or seat cushion of the vehicle seat structure. The vehicle seat structure includes a section (4) which is mounted detachable on the back rest (2) of the vehicle seat structure or the seat cushion thereof, in a manner to enable the section to be extended therefrom. The chair (8) can be collapsed to a state in which it can be accommodated in a cavity (3) provided in the back rest (2) or the seat cushion. The chair (8) is also constructed in a manner to enable the chair to be extended from the cavity (3) and developed to form a rearwardly facing child's chair in the vehicle.

FIG.4

EP 0 348 374 A1

# Description

## A vehicle seat structure which incorporates a child's chair

The present invention relates to a vehicle seat structure which incorporates structurally a child's chair.

A large number of vehicle seat structure constructions which incorporate a chair for children have been proposed in the art. Hitherto, however, it has not been possible to put these proposals into effect, mainly because the presence of the chair impairs the comfort of the vehicle seat structure for other passengers. More specifically, the comfort of the passenger seat is impaired by the presence of harder padding and upholstery, the lack of means for adjusting seat pressure against the small of the back, and the absence of heating elements in the seat structure.

Accordingly, the object of the present invention is to circumvent the drawbacks hitherto associated with vehicle seat structures which incorporate a child's chair, and to enable a child's chair which in use will face rearwarly in the vehicle to be built into a vehicle seat structure.

This object is achieved with a vehicle seat structure structure according to the invention, having the characteristic features set forth in the following claims.

The invention will now be described in more detail with reference to a non-limiting, exemplifying embodiment thereof illustrated in the accompanying drawings, in which

Figure 1 is a front view of the back support of an inventive vehicle seat structure constructed in accordance with a first embodiment of the invention;

Figure 2 is a side view of the inventive vehicle seat structure adjusted to a position for use by an adult passenger;

Figure 3 is a side view of the inventive vehicle seat structure with the seat in a first state of seat development;

Figure 4 is a view of the vehicle seat structure corresponding to Figure 3, but with the seat in a second state of development;

Figure 5 is a side view of a second embodiment of an inventive vehicle seat structure with the seat adjusted for use by an adult passenger;

Figure 6 is a side view of the seat of Figure 5, with said seat developed for use as a reawardly facing child's chair;

Figure 7 is a side view of a third embodiment of an inventive vehicle seat structure, with the seat structure adjusted for use by an adult passenger; and

Figure 8 is a side view of the vehicle seat structure of Figure 7 with the seat structure adjusted to a first development state.

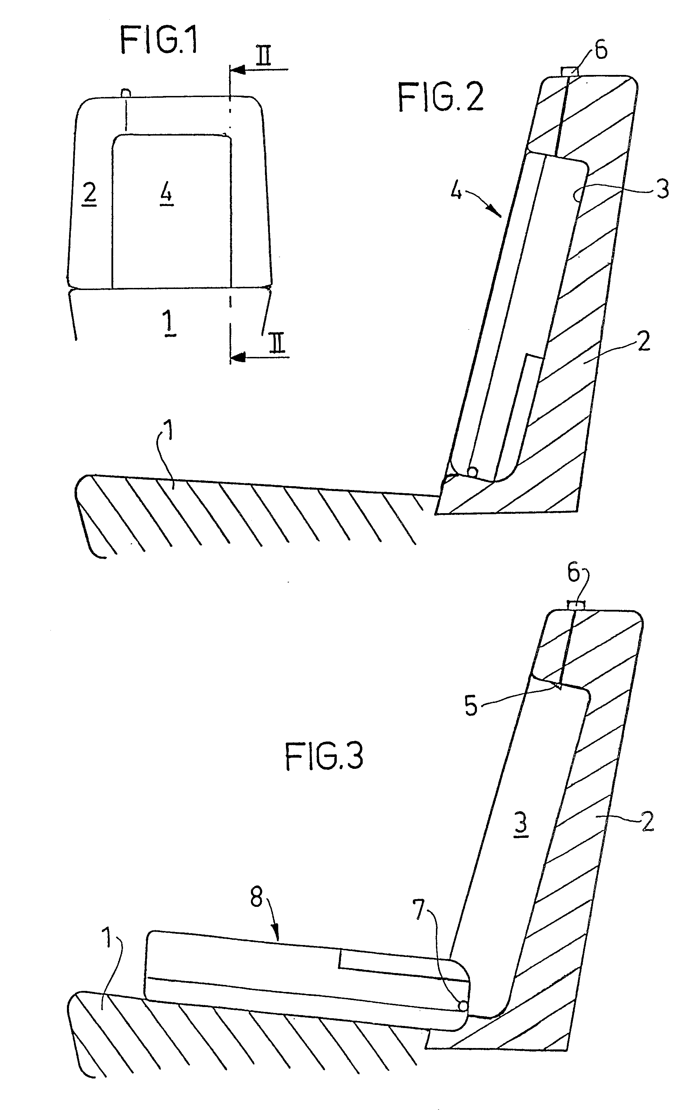

Figure 1 illustrates a vehicle seat structure structure which includes a seat cushion 1 and a back rest 4. The back rest 2 includes a section 4 which is held detachably in a cavity 3 provided in the actual back rest itself. The detachable section 4 incorporates the conventional padding and upholstery of a vehicle seat structure back rest, and may optionally also incorporate adjustable means for supporting the lumber region of the back and also optionally heating elements. The Figure 1 embodiment also includes a latch device 5 by means of which the detachable section can be latched securely to the back rest. The latching device 5 can be released with the aid of latch release means 6 which can be operated from outside the back rest, for the purpose of dropping the detachable section 4, as described in more detail herebelow.

Figure 2 is a schematic side view of the inventive vehicle seat structure, which shows the detachable section 4 of the back rest 2. As will be seen from the Figure, the detachable section 4 is hinged at its lower end to the lower tube of the back rest 2, or to the side parts of the back rest, by means of a pivot device 7. Figure 2 also illustrates a child's chair insert 8, which in this Figure is shown in its raised position in the back rest 2, between the upholstered, detachable section 4 and the rear surface of the back rest 2. The child's chair insert 8 is also preferably connected to the pivot or hinge means 7. The child's chair insert 8 will be described in more detail hereinafter.

Figure 3 illustrates a state of development in which the latching device holding the detachable section to the back support has been released and the detachable section 4 and the child's chair insert 8 have been dropped down onto the seat 1, by rotating the pivot device 7.

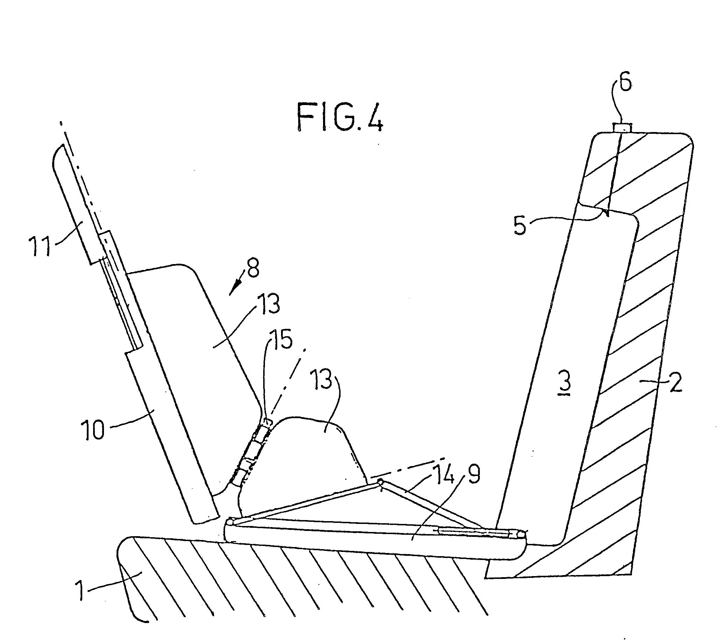

Figure 4 illustrates a state of vehicle seat structure development in which the insert 8 occupies its actual position of use. As will be seen from Figure 4, the insert 8 includes a seating cushion 9 and a back rest 10, which may optionally by supplemented with a neck support 11. As shown in Figure 4, the neck support 11 may be arranged for withdrawal from the back rest 10, so as to enable the neck support to be adjusted to a desired height. The seating cushion 9 and back rest 10 of the child's chair insert 8 are mutually hinged by hinge means located at the opposite end of the cushion in relation to the pivot device 7. The seating cushion 9 and back rest 10 of the child's chair insert are also mutually connected by means of an extendible and collap sible strut or brace arrangement which also functions as side supports 13. Although not shown, the insert 8 may also suitably include a safety harness arrangement, so as to hold a child safely and securely in the chair. The lowest part of the side support 13, nearest the seating cushion 9, is suitably connected to a pivotable arm 14, the one end of which can be secured in different positions, such as to enable the back rest 10 to be adjusted to different inclined positions, as also illustrated in Figure 4. The two side support parts 13 are mutually connected by means of a pivot arrangement 15 and can be collapsed together for accommodation in the insert 8 in its raised collapsed state.

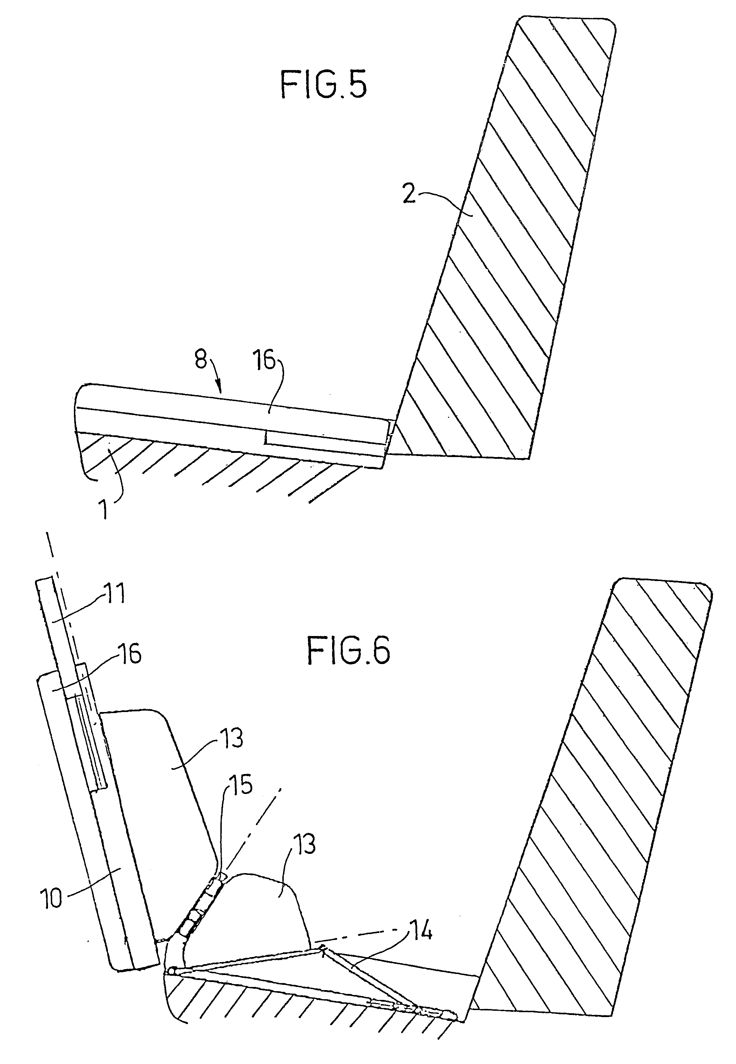

Figure 5 illustrates an embodiment in which the child's chair insert 8 is not mounted in the back rest of a vehicle seat structure structure, but in a cavity provided in the seat cushion 1 of said structure. In this case, the back rest 10 of the child's chair insert lies immediately beneath the upholstered and padded seat area 16 of the seat structure, and the two chair components comprising the back rest 10 and the seat surface 16 can be raised from the seating cushion 9 of the insert, this seating cushion remaining attached to the vehicle seat structure, as illustrated in Figure 6. The back rest 10 of this embodiment also enclose an extensible neck support 11, the remainder of the insert corresponding to the insert 8 of the embodiment illustrated in Figures 1-4.

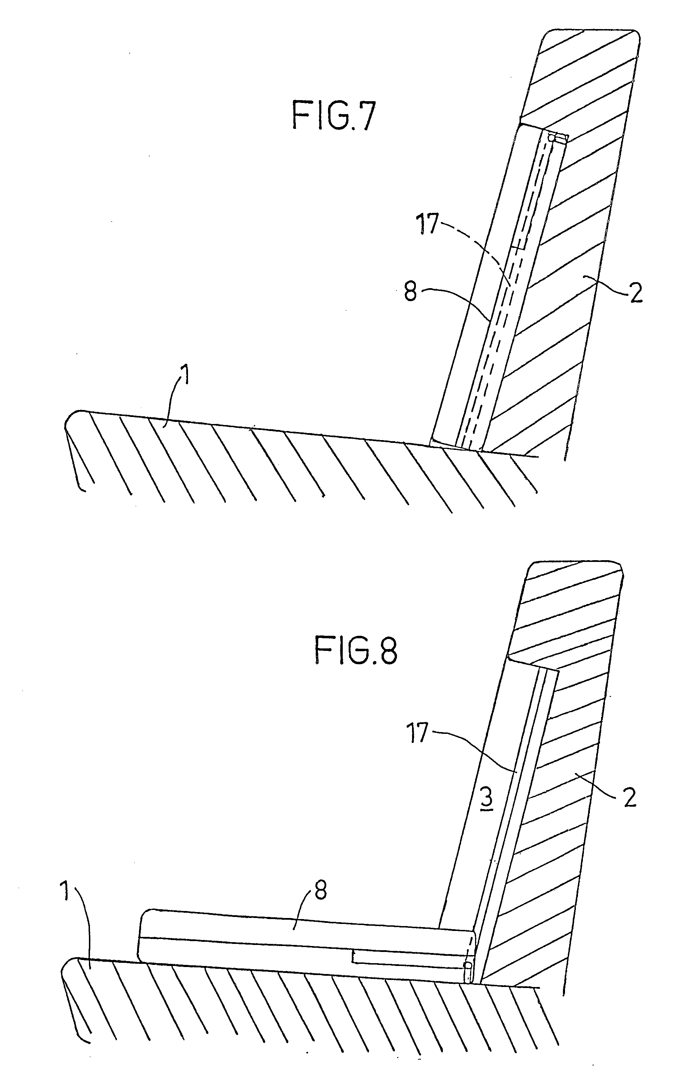

Figure 7 and 8 illustrate another embodiment of the attachment of the child's chair insert 8 to the back rest 2 of a vehicle seat structure. As with the embodiment illustrated in Figures 1-4, the insert 8 in accommodated in a cavity in the back rest 2, although in the case of this embodiment the insert 8 can be withdrawn from the lower end of the back rest 2 and is journalled for displacement and pivotal movement on rails 17 mounted in the cavity 3, by means of journal pins or the like.

The chair insert may be constructed so as to enable it to be removed completely from the back rest or seat cushion of the vehicle seat structure structure, and is attached to the pivot device 7 of the detachable section 4 with the aid of fastener devices mounted at the inner end of the seat cushion 9 of the chair insert 8. This obviates the necessity of providing all passenger seats of the vehicle with a chair insert 8, and the space occupied by the chair insert 8, between the rearward surface of the back rest 2 and its detachable section 4, or it correspondence in the seat cushion, can be filled with a foam rubber slab of the same thickness or depth dimension as the thickness of the depth dimension of the chair insert in the case of vehicle mass production. The child's chair insert 8 can then be purchased by parents of small children as an accessory, and fitted to a passenger seat by the parents themselves, when the child has reached a suitable age for sitting in a rearwardly facing child's chair.

The invention enables a child's chair to be incorporated within the confines of a back rest or seat cushion of a passenger seat structure without encroaching on the comfort of the passenger seat when occupied by an adult passenger. The padding in the detachable section 4 of the back rest or seat cushion can be configured in a manner such that an adult passenger will not notice the difference between a back rest or seat cushion which incorporates the chair and a back rest or seat cushion which does not incorporate the chair. The detachable section may also incorporate adjustable means for supporting the lumber region and back and also heating elements, and consequently it is not necessary for an adult passenger to forego any of the conventional comforts afforded by present day passenger seats. As beforementioned, when the child's chair is not required for use, the detachable section 4 is released from the back rest 2 or the seat cushion, by manipulating the catch release device 6. The detachable section 4 is then rotated around the pivot device 7 such as to bring said section into abutment with the seat cushion of the vehicle seat structure. The chair insert 8 is then pivoted forwards around the pivot device 7 and the back rest 10 of the chair is raised from the seat cushion 9, by rotation around the pivot or hinge means. The chair is then ready for use. The chair insert 8 can be collapsed readily to its non-use state, by proceeding in the reverse order, the detachable section 4 then being returned to the back rest 2, so as to prepare the passenger for an adult passenger.

It will be understood that the invention is not restricted to the front passenger seat of a vehicle, but that a detachable section with an inwardly attachable child's chair insert 8 can also be positioned in the rear seat of a vehicle.

**Claims**

1. A vehicle seat structure structure incorporating a child's chair, in which the vehicle seat structure can be converted between a state in which an adult passenger can be seated in the seat cushion (1) of the vehicle seat structure structure and rest against the back rest (2) of said seat structure, and a state for accommodating a child seated in the chair (8) incorporated in said seat structure, characterized in that the child's chair (8) includes an assembly which comprises at least one child's back rest (10) and which is located in a cavity (3) formed in the back rest (2) or seat cushion (1) of the vehicle seat structure, and which for the purpose of accommodating an adult passenger can be collapsed in the vehicle seat structure and which for the purpose of accommodating a child is extended from the vehicle seat structure with the child back rest (10) extending substantially vertically at the forward end of the vehicle seat structure (1), such as to provide a rearwardly facing child's chair.

2. A vehicle seat structure according to claim 1, characterized in that the cavity (3) is formed in the back rest (2) of the vehicle seat structure structure.

3. A vehicle seat structure structure according to claim 1, characterized in that the cavity (3) is provided in the seat cushion (1) of the vehicle seat structure structure.

4. A vehicle seat structure structure according to any one of the preceding claims, characterized in that the assembly (8), capable of being extended from the vehicle seat structure, is latched in its collapsed state by means (6) capable of being operated from outside the vehicle seat structure.

5. A vehicle seat structure structure according to any one of the preceding claims, characterized in that the extenseable assembly (8) includes both a seat cushion (9) and a back rest (10).

6. A vehicle seat structure structure according to claim 5, characterized in that the extenseable assembly (8) includes a safety harness arrangement by means of which a child can be secured in the chair.

7. A vehicle seat structure structure according to claim 5 or 6, characterized in that the extenseable assembly (8) also includes a raiseable side support (13).

8. A vehicle seat structure structure according to any one of the preceding claims, characterized in that the child chair (8) has the form of a loose insert capable of being fitted to and dismantled from the back rest (2) of the vehicle seat structure structure.

9. A vehicle seat structure structure according to any one of the preceding claims, characterized in that the chair assembly (8) is mounted for pivotal movement about a horizontal axis (7) located in the lower part of the back rest (2) of the vehicle seat structure structure.

10. A vehicle seat structure structure according to any one of claims 1-8, characterized in that the chair assembly (8) is mounted for displacement and pivotal movement on rails (17) fitted to the back rest (2) or the seat cushion (1) of the vehicle seat structure structure.

FIG.1

II

II

2  4

1

1

FIG.2

6

4  3

2

FIG.3

6

5

3  2

8

1  7

FIG.4

FIG.5

FIG.6

FIG.7

17

8

2

1

FIG.8

17

3

2

8

1

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 382 354 (GENERAL)<br>* Page 3, line 6 - page 4, line 13; figures * | 1-3,5,6,9 | B 60 N 1/12 |
| A | DE-A-3 221 604 (VOLKSWAGENWERK)<br>* Page 4, lines 5-27; figures * | 1,3,9 | |
| A | US-A-3 094 354 (BERNIER)<br>* Column 1, line 64 - column 2, line 63; figures * | 1,2,4,6,7,9 | |
| A | DE-A-1 580 785 (SCHRÖDER)<br>* Page 2, lines 8-30; figures * | 1,4,7 | |
| A | DE-A-3 716 038 (VOLKSWAGEN)<br>* Column 2, line 60 - column 3, line 16; figures * | 1,2,8 | |

TECHNICAL FIELDS
SEARCHED (Int. Cl.4)

B 60 N 1/00
A 47 D 1/00

The present search report has been drawn up for all claims

| Place of search | Date of completion of the search | Examiner |
|---|---|---|
| THE HAGUE | 28-09-1989 | HORVATH R.C. |

EPO FORM 1503 03.82 (P0401)